# EUROPÄISCHE PATENTANMELDUNG

(11) **EP 4 403 485 A1**
(43) Veröffentlichungstag der Anmeldung: **24.07.2024**
(21) Anmeldenummer: 23152395.2
(22) Anmeldetag: 19.01.2023
(51) Int. Cl.: B65D 35/12, B65D 35/10, B29C 45/00, B29C 45/33, B29C 45/37

(54) **TUBENSCHULTER ZUR VERWENDUNG MIT EINEM UNIVERSALDECKEL, VERPACKUNGSTUBE UND VERFAHREN ZUR HERSTELLUNG VON TUBENSCHULTERN**

(71) Anmelder: PackSys Global AG, 8630 Rüti (CH)
(72) Erfinder: Läubli, Julius, 8645 Jona (CH)
(74) Vertreter: Patent- und Rechtsanwälte Behrmann Wagner PartG mbB

(57) **Zusammenfassung**

Tubenschulter (01) für eine Verpackungstube mit einem Verbindungsabschnitt (02) zur Verbindung mit einem Tubenkörper (08) oder Tubenmantel, einem Schulterabschnitt (03) mit dem ein Querschnitt des Verbindungsabschnitts (02) auf einen Querschnitt eines Auslassabschnitts (04) verringert wird, wobei in dem Auslassabschnitt (04) ein Formkragen (05) ausgebildet ist, der zur Befestigung eines Tubendeckels (14) und zur Abdichtung einer Auslassöffnung (07) im Zusammenwirken mit dem Tubendeckel (14) in einem geschlossenen Zustand dient wobei erfindungsgemäß der Auslass einen gegenüber dem Formkragen (05) innenliegend ausgebildeten zusätzlichen Öffnungskragen (06) aufweist, der einen Querschnitt, insbesondere einen Durchmesser (D), der Auslassöffnung (07) definiert.

## Beschreibung

Die vorliegende Erfindung betrifft eine Tubenschulter für Verpackungstuben nach dem Oberbegriff des Anspruchs 1. Die Erfindung betrifft ferner eine Verpackungstube mit einem Tubenkörper, einer Tubenschulter und einem Tubendeckel gemäß des Oberbegriffs des Anspruchs 9. Schließlich betrifft die vorliegende Erfindung auch ein Verfahren zur Herstellung von Tubenschultern für Verpackungstuben mit den Merkmalen des Anspruchs 10.

Im Stand der Technik sind für Verpackungstuben und deren Herstellung bereits verschiedene Ansätze bekannt. Oftmals werden dabei Tubenkörper oder Tubenmäntel, die beispielsweise aus einem Laminat hergestellt, extrudiert oder formgeblasen sein können, an einem Ende in einer axialen Richtung mit einer Tubenschulter verbunden, wobei die Tubenschulter im Wesentlichen dazu dient, einen Querschnitt oder einen Durchmesser des Tubenkörpers oder Tubenmantels auf einen Querschnitt oder Durchmesser eines Tubenauslasses oder eines Tubendeckels zu verringern.

An einem Auslassabschnitt der Tubenschulter, mit einem entsprechend verringerten Querschnitt oder Durchmesser sind dann in aller Regel Mittel vorgesehen, um einen Tubendeckel mit der Tubenschulter abnehmbar oder entfernbar zu befestigen. In einem einfachen Beispiel kann dies über entsprechende Gewinde im Auslassabschnitt und auf Seiten des Deckels erreicht werden, die ein Aufschrauben und Abschrauben eines Tubendeckels erlauben. In anderen, bekannten Ausführungsformen können Klappdeckel oder Schnappdeckel mit der Tubenschulter verbunden oder einstückig, gegebenenfalls sogar monolithisch, mit der Tubenschulter ausgebildet werden.

Bei der vorangehend sehr allgemein beschriebenen Vorgehensweise zur Konstruktion und Herstellung von Verpackungstuben besteht grundsätzlich die Aufgabe je nach zu verpackendem oder zu bevorratendem Stoff einerseits den Tubenmantel oder Tubenkörper entsprechend zu dimensionieren und andererseits die Auslassöffnung der Verpackungstube so zu dimensionieren, dass die Dosierung durch den Benutzer bei der Nutzung der Verpackungstube oder bei der Entnahme des verpackten Stoffs sinnvoll und mit einem gewünschten oder empfohlenen Volumenfluss stattfinden kann. Dazu wurde in der Vergangenheit in vielen Fällen der Tubenkonstruktion und Tubenherstellung eine individuelle Konfektionierung von Tubenkörper, Tubenschulter und Tubendeckel vorgenommen, die jeweils individuell auf den Anwendungszweck oder das zu verpackende/zu bevorratende Produkt abgestimmt waren. Dies führt einerseits zu erheblichem Konstruktionsaufwand und hat zudem den Nachteil, dass für die Herstellung eine Vielzahl von unterschiedlichen Maschinen, Verfahren und Werkzeuge hergestellt, bevorratet und gewartet werden müssen.

Außerdem hat die oben beschriebene Vorgehensweise einer individuellen Planung/Konstruktion von Tubenkörper, Tubenschulter und Tubendeckel den Nachteil, dass oftmals mehr Material oder Rohstoff bei der Tubenherstellung zum Einsatz kommt, als grundsätzlich notwendig.

Die Aufgabe der vorliegenden Erfindung besteht dementsprechend darin, eine Tubenschulter für Verpackungstuben vorzuschlagen, die die Nachteile im Stand der Technik überwindet und insbesondere eine universelle Verwendung eines einzigen, bevorzugt besonders materialsparenden Tubendeckels ermöglicht, sodass den Anforderungen an die Verpackungstube, insbesondere im Hinblick auf bereitgestelltes Volumen und Grö-ße/Querschnitt oder Durchmesser der Auslassöffnung entsprochen werden kann, ohne dass aufwendige Umkonstruktionen erforderlich sind und insbesondere neben der Verwendung eines universellen Tubendeckels auch die Verwendung und Herstellung einer weitestgehend universellen Tubenschulter ermöglicht wird.

Im Hinblick auf die Tubenschulter wird diese Aufgabe mit den Merkmalen des Anspruchs 1 gelöst. Bezüglich einer Verpackungstube wird diese Aufgabe mit den Merkmalen des Anspruchs 9 gelöst. Im Hinblick auf ein Verfahren zur Herstellung von Tubenschultern für Verpackungstuben wird die besagte Aufgabe mit den Merkmalen des Anspruchs 10 gelöst.

Vorteilhafte Ausführungsformen der Erfindung sind Gegenstand der nachfolgenden Beschreibung, Figurenbeschreibung, der Figuren sowie der Unteransprüche.

Zur Vermeidung von unnötigen Wiederholungen sollen nachfolgend vorrichtungsmäßig offenbarte Merkmale auch als entsprechend verfahrensmäßig offenbart und beanspruchbar gelten, und umgekehrt.

Die erfindungsgemäße Tubenschulter für eine Verpackungstube mit einem Verbindungsabschnitt zur Verbindung mit einem Tubenkörper oder Tubenmantel, einem Schulterabschnitt, mit dem ein Querschnitt des Verbindungsabschnitts auf ein Querschnitt eines Auslassabschnitts verringert wird und einem Auslassabschnitt, der einen Formkragen umfasst, der zur Befestigung eines Tubendeckels und zur Abdichtung einer Auslassöffnung im Zusammenwirken mit dem Tubendeckel in einem geschlossenen Zustand dient umfasst in erfindungsgemäßer Weise zudem einen gegenüber dem Formkragen innenliegend, bevorzugt radial innenliegend, ausgebildeten, zusätzlichen Öffnungskragen, der einen Querschnitt, insbesondere einen Durchmesser der Auslassöffnung definiert.

Die Erfindung basiert damit auf der Grundüberlegung, einerseits einen Formkragen, möglichst standardmäßig, auszubilden, um einen, besonders bevorzugt materialsparenden, Standard-Tubendeckel, beispielsweise einen Deckel aus einer Getränkegefäße Anwendung, aufzunehmen und zu befestigen sowie im verschlossenen Zustand des Standard-Tubendeckels eine Dichtwirkung oder Erstdichtwirkung bereitzustellen, und andererseits die tatsächliche Abmessung oder die tatsächliche Fläche der Auslassöffnung der Verpackungstube nicht über den Tubendeckel und eine Öffnung im Inneren des Tubendeckels zu definieren, sondern dass stattdessen der Öffnungskragen, der zusätzlich und innenliegend oder radial innenliegend gegenüber dem Formkragen vorgesehen ist zur Vorgabe oder Definition der tatsächlichen oder wirksamen Auslassöffnung der Verpackungstube zu nutzen. Damit kann neben einer standardmäßigen Verwendung eines entsprechend vorteilhaften Tubendeckels, der insbesondere besonders materialsparend ausgebildet ist, die Anpassung der Tubenschulter zur Definition der Auslassöffnung der Tubenschulter und damit der Verpackungstube darauf reduziert werden, dass jeweils individuell an den jeweiligen Zweck oder den Tubentyp angepasste Öffnungskragen hergestellt werden.

Wie nachfolgend, insbesondere mit Bezug zu dem erfindungsgemäßen Verfahren noch ausführlicher beschrieben werden wird, kann jedoch eine Variation des Öffnungskragens und damit eine Variation der Auslassöffnung der Tubenschulter und damit der gesamten Tube über den jeweils wirksamen Durchmesser/Querschnitt der Auslassöffnung sehr viel einfacher und effektiver bewirkt werden, als bei einer bekannten, gattungsgemäßen Anpassung des Tubendeckels oder einer anders bewirkten Anpassung der Tubenschulter.

Als beispielhafter und entsprechend vorteilhafter Tubendeckel kann beispielsweise ein Deckel verwendet werden, wie er von der Firma "Betapack S.A.U" unter dem Produktnamen "Snap Click Pelican" vertrieben wird. Die Funktionsweise und der Aufbau des Deckels, der bevorzugt als Standard-Tubendeckel zusammen mit der Tubenschulter der vorliegenden Erfindung zum Einsatz kommen kann ist beispielsweise in der EP 4 039 613 A1 beschrieben. Auf die diesbezügliche Offenbarung des vorteilhaften Tubendeckels und dem Zusammenwirken mit dem bekannten Formkragen, der in der besagten Offenbarung als "zylindrischer Teil" (cylindrical part 8) des "Hals" (neck 2) bezeichnet wird, wird hiermit Bezug genommen und die relevante technische Offenbarung durch Verweis in die vorliegende Anmeldung mit aufgenommen.

Es ist besonders von Vorteil, wenn die erfindungsgemäße Tubenschulter für einen standardisierten oder einheitlichen Tubendeckel konstruiert oder ausgelegt ist, der grundsätzlich als Flaschendeckel konzipiert ist oder als Deckel mit einer verhältnismäßig großen Deckelöffnung ausgelegt ist. Denn dies erlaubt über die erfindungsgemäße Realisierung und Anpassung des Öffnungskragens der Tubenschulter den Querschnitt, insbesondere Durchmesser, der Auslassöffnung der Tubenschulter in einem weiten/großen Bereich zu variieren.

Gemäß einer ersten, vorteilhaften Ausgestaltung der Tubenschulter kann vorgesehen sein, dass der Öffnungskragen einstückig, insbesondere monolithisch zusammen mit dem Formkragen ausgebildet ist. Dies ermöglicht einerseits eine stabile Ausgestaltung von Formkragen und Öffnungskragen und eine effektive Herstellung der Tubenschulter, beispielsweise in einem einzigen Formgebungsverfahren, wie nachfolgend noch eingehender beschrieben.

Außerdem ermöglicht die einstückige, insbesondere monolithische, Ausbildung von Öffnungskragen und Formkragen, dass die Anordnung und Ausrichtung von Formkragen und Öffnungskragen optimal aufeinander abgestimmt sind.

In einer weiteren, vorteilhaften Ausführungsform der Tubenschulter kann vorgesehen sein, dass der Öffnungskragen, insbesondere im Querschnitt, als Abzweigung des Formkragens ausgebildet ist. Dies ermöglicht in vorteilhafter Weise einerseits eine stabile Ausbildung des Öffnungskragens und andererseits eine problemlose oder ungehinderte Nutzung des Formkragens in Übereinstimmung mit dem vorteilhaft standardisierten Tubendeckel. So kann beispielsweise vorgesehen sein, dass ein im Wesentlichen in einer axialen Richtung verlaufender Ringfortsatz des Tubendeckels im geschlossenen Zustand des Tubendeckels an einer Innenseite oder Innenoberfläche des Formkragens zur Anlage kommt und gegebenenfalls dort auch eine Dichtwirkung erzeugt. Dadurch, dass der Öffnungskragen als Abzweigung, bevorzugt in axialer Richtung entsprechend zurückversetzt, vom Formkragen ausgebildet sein kann, kann der Fortsatz oder Ringfortsatz des Deckels weiterhin ungestört mit dem Formkragen zusammenwirken und gleichzeitig die entsprechend gewünschte Definition der Auslassöffnung über die Ausgestaltung des Öffnungskragens erreicht werden.

In einer weiteren, besonders vorteilhaften Ausführungsform der Tubenschulter kann vorgesehen sein, dass der Öffnungskragen im Querschnitt eine S-förmige Kontur ausbildet. Dies erlaubt die Ausbildung des Öffnungskragens mit einer ausreichenden Stabilität und kann insbesondere durch einen Endabschnitt der S-förmigen Kontur, wie nachfolgend noch im Detail beschrieben werden wird, eine besonders einfache und vorteilhafte Anpassung oder Veränderung der Auslassöffnung ermöglichen.

Gemäß einer weiteren, ebenfalls besonders wünschenswerten Variante der Tubenschulter kann vorgesehen sein, dass in einer axialen Richtung der Formkragen und der Öffnungskragen eine identische oder fast identische Erstreckung aufweisen. Dadurch können unterschiedliche vorteilhafte Wirkungen erzeugt werden. Einerseits kann dadurch erreicht werden, dass auch der Öffnungskragen oder ein Teil des Öffnungskragens im geschlossenen Zustand des Tubendeckels zusammen mit dem Tubendeckel eine Dichtwirkung ausbildet. Dies wiederum kann vorteilhaft dazu führen, dass sich im geschlossenen Zustand des Deckels nicht ungewollt im Zwischenraum zwischen dem Formkragen und dem Öffnungskragen, beispielsweise durch Druckeinwirkung auf die Verpackungstube, eine Ansammlung oder Ablagerung von bevorratetem Stoff ausbildet. Weiterhin kann durch die identische oder fast identische Erstreckung von Öffnungskragen und Formkragen in axialer Richtung eine einfache Handhabung der Tubenschulter im Herstellungsprozess der Verpackungstube und im Herstellungsprozess der Tubenschulter selbst gewährleistet werden.

Gemäß einer weiteren, besonders wünschenswerten Variante der Tubenschulter kann außerdem vorgesehen sein, dass der Öffnungskragen einen in einer axialen Richtung überstehenden Dichtwulst aufweist, der bevorzugt über ein sonstiges axiales Ende des Formkragens leicht übersteht. Wie vorangehend bereits angedeutet, kann dadurch besonders vorteilhaft auch über den Öffnungskragen im geschlossenen Zustand des Tubendeckels eine Dichtwirkung zwischen Öffnungskragen und Tubendeckel erreicht werden.

Weiterhin kann in einer vorteilhaften Ausführungsform der Tubenschulter vorgesehen sein, dass der Öffnungskragen und der Formkragen in einem Querschnitt eine y-förmige Kontur ausbilden. Eine derartige Kontur lässt sich besonders leicht und vorteilhaft im Rahmen eines Formgebungsprozesses, beispielsweise im Rahmen eines Guss- oder Spritzgussverfahrens realisieren und ermöglicht u.a. die Vorteile der vorangehend beschriebenen Ausgestaltungen.

In einer weiteren, besonders vorteilhaften Ausgestaltung der Tubenschulter kann vorgesehen sein, dass der Öffnungskragen einen im Wesentlichen in einer radialen Richtung verlaufenden, innenliegenden Fortsatz aufweist, dessen innerer Rand den Querschnitt, insbesondere den Durchmesser, der Auslassöffnung definiert. Durch den wesentlichen radial verlaufenden innenliegenden Fortsatz kann in vorteilhafter Weise gleichzeitig eine einfache Variation des Durchmessers oder Querschnitts der Auslassöffnung erreicht werden und zudem eine gute und sichere Dichtwirkung des Öffnungskragens gegenüber oder an einem geschlossenen Standard-Tubendeckel erreicht werden.

Die eingangs definierte Aufgabe wird auch durch eine Verpackungstube gelöst, mit einer einends an einem Tubenkörper angeordneten oder mit diesem verbundenen Tubenschulter, wobei an der Tubenschulter in einem Auslassabschnitt ein Tubendeckel befestigt ist, wobei erfindungsgemäß vorgesehen ist, dass die Tubenschulter nach einer der vorhergehenden Ausführungsform ausgebildet ist, sodass in einem geöffneten Zustand des Deckels eine Auslassöffnung der Verpackungstube durch den innenliegend gegenüber einem Formkragen angeordneten Öffnungskragen der Tubenschulter definiert wird.

Durch die erfindungsgemäße Verpackungstube wird erreicht, dass mit einer entsprechenden Anpassung des Verbindungsabschnitts der Tubenschulter an den jeweiligen Tubenkörper oder Tubenmantel und die Veränderung oder Anpassung des Öffnungskragens an die gewünschte, effektive oder wirksame Auslassöffnung der Verpackungstube die Möglichkeit geschaffen wird fast jeden beliebigen Tubenkörper oder Tubenmantel unter Verwendung eines vollständig oder wenigstens weitgehend standardisierten Tubendeckels unter Verwendung einer entsprechend angepassten Tubenschulter zu einer Verpackungstube zu verbinden.

Dadurch wird die Bandbreite von unterschiedlichen Einzelteilen minimiert oder die Verwendung von Gleichteilen maximiert. Ferner wird dadurch eine erhebliche Materialeinsparung erreicht, insbesondere wenn ein entsprechend materialsparender Tubendeckel mit der Tubenschulter kombiniert wird.

Der Tubendeckel kann vorteilhaft gemäß der Lehre der EP 4 039 613 A1 ausgebildet sein.

Bevorzugt kann der Tubendeckel als Klappdeckel oder Schnappdeckel ausgebildet sein und so ausgebildet sein, dass dieser in wenigstens einer, bevorzugt in zwei, Öffnungspositionen stabil gehalten wird oder fixierbar ist.

Im Hinblick auf das erfindungsgemäße Verfahren zur Herstellung von Tubenschultern, insbesondere nach einer der vorangehend beschriebenen Ausführungsformen mit einem Auslassabschnitt, in dem ein Formkragen ausgebildet ist, der zur Befestigung eines Tubendeckels und zur Abdichtung einer Auslassöffnung im Zusammenwirken mit dem Tubendeckel in einem geschlossenen Zustand dient, wobei der Auslassabschnitt einen gegenüber dem Formkragen innenliegend ausgebildeten, zusätzlichen Öffnungskragen aufweist, sind zur Verwirklichung der Erfindung die folgenden Verfahrensschritte vorgesehen:
Bereitstellen eines Formgebungswerkzeugs zum Ausbilden einer Tubenschulter.

Temporäres Verändern des Formgebungswerkzeugs, bevorzugt durch Einsätze oder bewegliche Komponenten des Formgebungswerkzeugs, zur Vorgabe eines Innenquerschnitts, insbesondere eines Innendurchmessers, des Öffnungskragens.

Befüllen des veränderten Formgebungswerkzeugs mit einem Formgebungsmaterial, bevorzugt einer Kunststoffschmelze oder einer Trockenfasermasse.

Entformen des erstarrten oder verfestigten Formgebungsmaterials aus dem veränderten Formgebungswerkzeug.

Durch das erfindungsgemäße Verfahren lässt sich in besondere effektiver Weise ohne die Umkonstruktion der Tubenschulter als Ganzes und insbesondere ohne den Entwurf und die Herstellung von einer Vielzahl von unterschiedlichen Formgebungswerkzeugen eine jeweils angepasste Herstellung der Tubenschulter erreichen, bei der bevorzugt ohne oder zumindest ohne wesentliche Nachbearbeitung eine individuell angepasste Auslassöffnung bereitgestellt werden kann, welche bevorzugt im Zusammenwirken mit einem standardisierten Formkragen die Verwendung eines ebenfalls bevorzugt standardisierten Tubendeckels in der Fertigung oder Herstellung einer entsprechenden Verpackungstube ermöglicht.

Bevorzugt kann in einer ähnlichen Weise, bevorzugt über Einsätze und/oder bewegliche Komponenten eines Formgebungswerkzeugs auch eine Anpassung des Verbindungsabschnitts der Tubenschulter erreicht werden, so dass dann auch die Anpassung an unterschiedliche Tubenkörper mit minimalem Aufwand flexibel möglich ist.

Nachfolgend werden Einzelheiten der Erfindung anhand von lediglich beispielhaften rein schematischen Zeichnungen erläutert. Darin zeigen:
- Fig. 1:: eine schematische Perspektivdarstellung einer erfindungsgemäßen Tubenschulter;
- Fig. 2:: eine teilweise als Schnittdarstellung gehaltene Seitenansicht einer erfindungsgemäßen Tubenschulter samt eines Teils eines angeformten/verbundenen Tubenkörpers;
- Fig. 3:: eine vergrößerte Darstellung des Ausschnitts A der Fig. 2;
- Fig. 4:: eine schematische Schnittdarstellung zur Veranschaulichung des Zusammenwirkens der erfindungsgemäßen Tubenschulter mit einem, bevorzugt standardisierten, Tubendeckel.

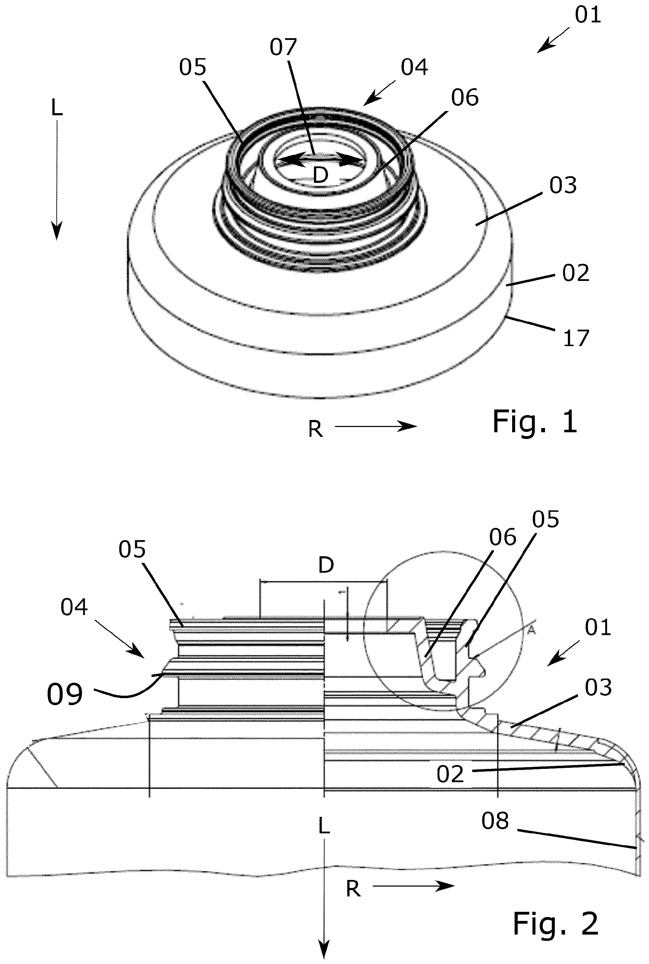

Fig. 1 zeigt eine erfindungsgemäße Tubenschulter 01, die an einem ersten, in axialer Richtung L verlaufenden Ende 17 der Tubenschulter 01, welches die maximale Erstreckung der Tubenschulter 01 in radialer Richtung R definiert einen Verbindungsabschnitt 02 ausbildet, der zur Verbindung mit einem Tubenkörper oder Tubenmantel einer Verpackungstube dient. Der Verbindungsabschnitt 02 geht in einen Schulterabschnitt 03 über. Der Schulterabschnitt 03 dient zur Verringerung des Querschnitts im Verbindungsabschnitt 02 auf einem Querschnitt in einem Auslassabschnitt 04.

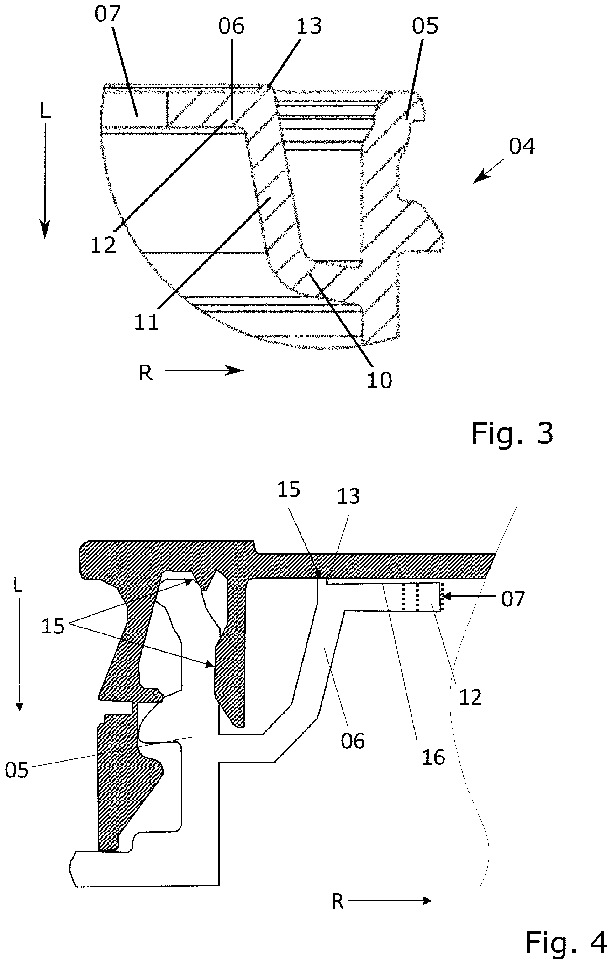

Im Auslassabschnitt 04 ist ein gattungsgemäßer, bekannter Formkragen 05 ausgebildet, der im Beispiel der Fig. 1 einen im Wesentlichen zylindrischen, ringförmigen Formkragen 05 bildet. Der Formkragen 05 dient zur Befestigung eines Tubendeckels und zur Abdichtung einer Auslassöffnung im Zusammenwirken mit einem Tubendeckel in einem geschlossenen Zustand (siehe auch: Fig. 4). Innenliegend gegenüber dem Formkragen 05 ist erfindungsgemäß ein Öffnungskragen 06 ausgebildet, der zusätzlich zum Formkragen 05 vorgesehen ist. Durch den Öffnungskragen 06 wird ein Querschnitt, insbesondere ein Durchmesser D der Auslassöffnung 07 der Tubenschulter definiert.

In der Fig. 1 ist erkennbar, dass die wirksame oder effektive Auslassöffnung 07 nicht, wie bei bekannten Verpackungstuben über den Formkragen 05 oder über den mit dem Formkragen 05 verbundenen Tubendeckel definiert wird, sondern dass unabhängig von der Ausgestaltung eines Tubendeckels der gegenüber dem Formkragen 05 innenliegende Öffnungskragen 06 die Auslassöffnung 07 definiert und/oder begrenzt. Dies bedeutet auch, dass durch eine entsprechende Variation des Öffnungskragens 06 bei ansonsten unveränderter Tubenschulter und bei entsprechendem Zusammenwirken mit einem ebenfalls unveränderten, bevorzugt standardisierten Tubendeckel unterschiedliche Auslassöffnungen 07 realisiert werden können. Weiterhin kann über eine entsprechende Anpassung des Schulterabschnitts 03 und des Verbindungsabschnitts 02 erreicht werden, dass die erfindungsgemäße Tubenschulter 01 an unterschiedliche Tubenkörper, insbesondere Durchmesser von Tubenkörpern oder Tubenmänteln angepasst wird.

In der Darstellung der Fig. 2 ist eine Seitenansicht und eine teilweise Schnittdarstellung der erfindungsgemäßen Tubenschulter 01 im Zusammenwirken mit einem Tubenkörper 08 dargestellt. Der Tubenkörper 08 geht im Verbindungsabschnitt 02 der Tubenschulter formschlüssig, bevorzugt stoffschlüssig über. Der Formkragen 05 kann, insbesondere auf seiner Außenoberfläche 09 Strukturierungen und Formgebungen aufweisen, die dazu dienen mit einem Tubendeckel zusammenzuwirken, insbesondere die Befestigung eines Tubendeckels zu ermöglichen, um die Verrastung oder das Einschnappen eines Tubendeckels zu bewirken und die Abdichtung mit einem Tubendeckel im geschlossenen Zustand zu befördern.

Der innenliegend gegenüber dem Formkragen 05 ausgebildete Öffnungskragen 06 kann einstückig, bevorzugt monolithisch mit dem Formkragen 05 besonders bevorzugt einstückig oder monolithisch mit der gesamten Tubenschulter 01 ausgebildet sein.

In dem vergrößerten Ausschnitt A der Fig. 2, der in der Fig. 3 dargestellt ist, ist zu entnehmen, dass der Öffnungskragen 06 im Querschnitt eine etwa S-förmige Kontur aufweist, was dazu führt, dass der Öffnungskragen 06 insgesamt bei einer rotationssymmetrischen Ausbildung, wie beispielsweise in der Fig. 1 dargestellt, im Wesentlichen die Form eines Kegelstumpfes erhält.

Ein unterer Abschnitt 10 des Öffnungskragens 06 dient sowohl zur Einengung oder Verringerung des Öffnungsquerschnittes, hat aber auch denvorteilhaften Zweck, dass die sonstigen Teile des Öffnungskragen 06 nicht das Zusammenwirken mit einem in axialer Richtung L verlaufenden Ringfortsatz eines Tubendeckels behindern oder einschränken (siehe auch: Fig. 4). Der schräge Abschnitt 11 des Öffnungskragens 06 verringert weiterhin den Öffnungsquerschnitt und ermöglicht, dass ein axiales Ende des Öffnungskragens 06 im Wesentlichen auf der gleichen Höhe angeordnet ist, wie ein axiales Ende des Formkragens 05. Der obere Abschnitt 12 des Öffnungskragens 06 definiert schließlich, im Wesentlichen über seine Erstreckung in radialer Richtung R, die Auslassöffnung 07 oder den Querschnitt/Durchmesser D der Auslassöffnung 07. Durch eine Veränderung der Länge oder Erstreckung des oberen Abschnitts 12 in radialer Richtung R kann in einfacher und effektiver Weise die Auslassöffnung 07 verändert, insbesondere vergrößert oder verkleinert werden.

In der Darstellung der Fig. 3 ist auch ersichtlich, dass der Öffnungskragen 06 einen Dichtwulst 13 aufweist, der über ein axiales Ende des Formkragens 05 leicht übersteht. Die vergrößerte Darstellung der Fig. 3 zeigt auch, dass der Öffnungskragen 06 und der Formkragen 05 im Querschnitt eine y-förmige Kontur ausbilden, bei der der Öffnungskragen 06 als Abzweigung des Formkragens 05 ausgebildet ist.

In der Fig. 4 ist das Zusammenwirken der erfindungsgemäßen Tubenschulter 01 mit einem bevorzugt standardisierten Tubendeckel 14 dargestellt. Der Tubendeckel 14 und auch der Formkragen 05 entsprechen im Wesentlichen der Offenbarung der EP 5 039 613 A1, sodass im Bezug auf die grundsätzliche Ausbildung des Tubendeckels 14 und das Zusammenwirken mit dem Formkragen 05 auf die genannte Offenbarung Bezug genommen wird und diese durch Verweis in die vorliegende Beschreibung miteinbezogen wird. Es ist erkennbar, dass der Tubendeckel 14 in der Fig. 4 in einem geschlossenen und insgesamt ursprünglich ungeöffneten/versiegelten Zustand vorliegt.

Zwischen der Tubenschulter 01 und dem Tubendeckel 14 sind insgesamt drei Dichtstellen 15 ausgebildet. Zwei der Dichtstellen 15 werden durch ein Zusammenwirken des Tubendeckels 14 mit dem Formkragen 05 bewirkt. Eine dritte Dichtstelle 15 wird jedoch das Zusammenwirken des Öffnungskragens 06, insbesondere des Dichtwulst 13, mit dem Tubendeckel 14 verwirklicht. Dazu kann beispielsweise der Dichtwulst 13 an einer Innenoberfläche 16 des Tubendeckels 14 zur Anlage kommen. Es ist in der Fig. 4 auch über entsprechend strichpunktierte Darstellungen nochmals verdeutlicht, dass die Erstreckung des oberen Abschnitts 12 des Öffnungskragens 06 unterschiedlich lang ausgebildet sein kann, wodurch dann der Querschnitt oder der Durchmesser D der Auslassöffnung 07 der Tubenschulter 01 und damit der wirksame Querschnitt der Auslassöffnung der entsprechenden Verpackungstube verändert und angepasst werden kann, ohne dass ein anderer Tubendeckel 14 oder eine andere Ausgestaltung des Formkragens 05 realisiert werden müsste.

Die variable Ausgestaltung des oberen Abschnitts 12 des Öffnungskragens 06 kann in einem erfindungsgemäßen Verfahren durch eine Anpassung des Formgebungswerkzeug über Einsätze oder bewegliche Komponenten verwirklicht werden, die dann beim Befüllen des Formgebungswerkzeuges mit Formgebungsmaterial dazu führen oder dafür sorgen, dass eine unterschiedlich lange Erstreckung oder Ausdehnung des oberen Abschnitts 12 des Öffnungskragens 06 in radialer Richtung erreicht wird.

Dadurch kann in dem erfindungsgemäßen Verfahren mit einem im Wesentlichen unveränderten Formgebungswerkzeug und lediglich geringen Anpassungen am Formgebungswerkzeug eine besonders große Bandbreite an unterschiedlichen Tubenschultern 01 mit unterschiedlichen Auslassöffnungen 07 realisiert werden, die zudem dazu geeignet sind alle mit ein und demselben, bevorzugt standardisierten Tubendeckel 14, beispielsweise einem Tubendeckel 14 wie in der Fig. 4 dargestellt, zusammenzuwirken.

### Bezugszeichen

- 01: Tubenschulter
- 02: Verbindungsabschnitt
- 03: Schulterabschnitt
- 04: Auslassabschnitt
- 05: Formkragen
- 06: Öffnungskragen
- 07: Auslassöffnung
- 08: Tubenkörper
- 09: Außenoberfläche
- 10: unterer Abschnitt
- 11: schräge Abschnitt
- 12: obere Abschnitt
- 13: Dichtwulst
- 14: Tubendeckel
- 15: Dichtstellen
- 16: Innenoberfläche
- 17: Ende

- A: Ausschnitt
- L: axialer Richtung
- D: Durchmesser
- R: radiale Richtung

## Patentansprüche

1. Tubenschulter (01) für eine Verpackungstube mit einem Verbindungsabschnitt (02) zur Verbindung mit einem Tubenkörper (08) oder Tubenmantel, einem Schulterabschnitt (03) mit dem ein Querschnitt des Verbindungsabschnitts (02) auf einen Querschnitt eines Auslassabschnitts (04) verringert wird, wobei in dem Auslassabschnitt (04) ein Formkragen (05) ausgebildet ist, der zur Befestigung eines Tubendeckels (14) und zur Abdichtung einer Auslassöffnung (07) im Zusammenwirken mit dem Tubendeckel (14) in einem geschlossenen Zustand dient,
**dadurch gekennzeichnet,**
**dass** der Auslass einen gegenüber dem Formkragen (05) innenliegend ausgebildeten zusätzlichen Öffnungskragen (06) aufweist, der einen Querschnitt, insbesondere einen Durchmesser (D), der Auslassöffnung (07) definiert.

2. Tubenschulter nach Anspruch 1,
**dadurch gekennzeichnet,**
**dass** der der Öffnungskragen (06) monolithisch zusammen mit dem Formkragen (05) ausgebildet ist.

3. Tubenschulter nach Anspruch 1 oder 2,
**dadurch gekennzeichnet,**
**dass** der Öffnungskragen (06) als Abzweigung des Formkragens (05) ausgebildet ist.

4. Tubenschulter nach einem der vorhergehenden Ansprüche,
**dadurch gekennzeichnet,**
**dass** der Öffnungskragen (06) im Querschnitt eine s-förmige Kontur ausbildet.

5. Tubenschulter nach einem der vorhergehenden Ansprüche,
**dadurch gekennzeichnet,**
**dass** in einer axialen Richtung (L) der Formkragen (05) und der Öffnungskragen (06) eine identische oder fast identische Erstreckung aufweisen.

6. Tubenschulter nach einem der vorhergehenden Ansprüche,
**dadurch gekennzeichnet,**
**dass** der Öffnungskragen (06) einen in einer axialen Richtung (L) überstehenden Dichtwulst (13) aufweist, der bevorzugt über ein axiales Ende des Formkragens (05) übersteht.

7. Tubenschulter nach einem der vorhergehenden Ansprüche,
**dadurch gekennzeichnet,**
**dass** der Öffnungskragen (06) und der Formkragen (05) in einem Querschnitt eine y-förmige Kontur ausbilden.

8. Tubenschulter nach einem der vorhergehenden Ansprüche,
**dadurch gekennzeichnet,**
**dass** der Öffnungskragen (06) einen im Wesentlichen in einer radialen Richtung (R) verlaufenden innenliegenden Fortsatz aufweist, dessen innerer Rand den Querschnitt, insbesondere den Durchmesser (D), der Auslassöffnung (07) definiert.

9. Verpackungstube mit einem Tubenkörper (08) an dem einends eine Tubenschulter (01) ausgebildet ist, wobei an der Tubenschulter (01) in einem Auslassabschnitt (04) ein Tubendeckel (14) befestigt ist,
**dadurch gekennzeichnet,**
**dass** die Tubenschulter (01) nach einem der Ansprüche 1 bis 8 ausgebildet ist, so dass in einem geöffneten Zustand des Tubendeckels (14) eine Auslassöffnung (07) der Verpackungstube durch den innenliegend gegenüber einem Formkragen (05) angeordneten Öffnungskragen (06) definiert wird.

10. Verfahren zu Herstellung von Tubenschultern (01), insbesondere nach einem der Ansprüche 1 bis 8, mit einem Auslassabschnitt (04) in dem ein Formkragen (05) ausgebildet ist, der zur Befestigung eines Tubendeckels (14) und zur Abdichtung einer Auslassöffnung (07) im Zusammenwirken mit dem Tubendeckel (14) in einem geschlossenen Zustand dient, wobei der Auslassabschnitt (04) einen gegenüber dem Formkragen (05) innenliegend ausgebildeten zusätzlichen Öffnungskragen (06) aufweist mit den Verfahrensschritten:
- Bereitstellen eines Formgebungswerkzeugs zum Ausbilden einer Tubenschulter;
- temporäres Verändern des Formgebungswerkzeugs, bevorzugt durch Einsätze oder bewegliche Komponenten, zur Vorgabe eines Innenquerschnitts, insbesondere Innendurchmessers, des Öffnungskragen (06);
- Befüllen des veränderten Formgebungswerkzeugs mit einem Formgebungsmaterial, bevorzugt einer Kunststoffschmelze oder einer Trockenfasermasse;
- Entformen des Formgebungsmaterials aus dem veränderten Formgebungswerkzeug.
